(19) Europäisches Patentamt
European Patent Office
Office européen des brevets

(11) Numéro de publication : **0 007 817**
**B1**

# (12) FASCICULE DE BREVET EUROPÉEN

(45) Date de publication du fascicule du brevet : **17.03.82**

(21) Numéro de dépôt : **79400352.5**

(22) Date de dépôt : **01.06.79**

(51) Int. Cl.³ : **C 08 F 4/46**, C 08 G 63/10, C 08 G 65/10, C 08 G 69/20

(54) **Amorceurs de polymérisation anionique à base d'amidures alcalins et procédé de polymérisation anionique les utilisant.**

(30) Priorité : **06.07.78 FR 7820220**

(43) Date de publication de la demande : **06.02.80 (Bulletin 80/03)**

(45) Mention de la délivrance du brevet : **17.03.82 Bulletin 82/11**

(84) Etats contractants désignés : **BE CH DE GB IT LU NL SE**

(56) Documents cités :
**DE - A - 2 449 784**
**FR - A - 1 219 270**
**FR - A - 2 352 834**
**US - A - 3 274 169**

(73) Titulaire : **SOCIETE NATIONALE DES POUDRES ET EXPLOSIFS**
**12, quai Henri IV**
**F-75181 PARIS CEDEX 04 (FR)**

(72) Inventeur : **Boileau, Sylvie**
**38-40, rue des Cordelières**
**F-75013 Paris (FR)**
Inventeur : **Caubere, Paul**
**3, rue Emile Gallé**
**F-54000 Nancy (FR)**
Inventeur : **N'Debeka, Gilberte**
**11, place de Paris**
**F-54500 Vandoeuvre (FR)**
Inventeur : **Raynal, Serge**
**Orée de Sénart Bâtiment Hérédia**
**F-91210 Draveil (FR)**
Inventeur : **Lecolier, Serge**
**3, allée des Cartelines**
**F-91510 Janville sur Juine (FR)**

**EP 0 007 817 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

# Amorceurs de polymérisation anionique à base d'amidures alcalins et procédé de polymérisation anionique les utilisant

La présente invention concerne de nouveaux systèmes d'amorceurs pour la polymérisation anionique, un procédé de polymérisation anionique utilisant ces amorceurs et les polymères obtenus par ce procédé.

Les premières polymérisations anioniques ont été effectives par WURZ sur l'oxyde d'éthylène. Toutefois c'est notamment à ZIEGLER que revient le mérite de l'explication du mécanisme de la polymérisation anionique.

A cet égard, il convient de bien discerner entre la polymérisation anionique pure dont il est question dans tout ce qui suit et la polymérisation anionique coordinée qui fait intervenir des amorceurs tels que les sels d'aluminium, d'antimoine et des métaux de transition (par exemple les catalyseurs bimétalliques dit ZIEGLER-NATTA) et qui est sans rapport avec le domaine où s'exerce l'invention.

On sait depuis plusieurs années qu'il est possible de polymériser des lactones et les lactame en utilisant comme amorceur de polymérisation l'amidure de sodium (DE 1 960 385 et DE 2 111 545).

De la même façon SIGWALT et Coll. (C. R. Acad. Sci. T ; 252 pages 882-884 séance du 06 février 1961) ont démontré que l'amidure de sodium amorçait la polymérisation du sulfure de propylène.

Malheureusement l'efficacité de l'amidure comme amorceur est limité à des monomères particuliers, notamment à des hétérocycles très facilement polymérisables comme le sulfure de propylène, les lactones ou les lactames.

Par ailleurs, comme l'ont montré SANDERSON et HAUSER (JACS *71*, 1 595 (1949)), il est possible de polymériser le styrène en utilisant comme amorceur de polymérisation anionique l'amidure alcalin dans l'ammoniac liquide.

Malheureusement, outre que ce procédé présente l'inconvénient majeur d'être effectué dans des conditions qui ne sont pas rentables d'un point de vue industriel (température de réaction comprise entre − 30 et − 70 °C) la présence d'ammoniac provoque la terminaison prématurée et aléatoire de la polymérisation.

D'autres auteurs (brevet allemand DE 2 365 439) ont trouvé qu'il était possible d'exalter l'amidure alcalin par des sulfoxydes tels que :

$$Ø—SO—(CH_2)_6—SO—Ø$$

dans lesquels Ø représente un noyau phényle.

Mais encore une fois, les complexes de ce dernier ne donnent de bons résultats qu'avec des monomères aisément polymérisables tels que le sulfure de propylène.

De plus, ces complexes sont préparés dans des conditions qui ne sont pas rentables d'un point de vue industriel (− 70 °C, ammoniac liquide, puis réaction pendant 10 heures à − 45 °C).

La demanderesse a maintenant découvert des amorceurs de polymérisation anionique qui permettent de pallier les inconvénients précédents et qui résultent de l'association, en présence d'un solvant, d'un amidure alcalin choisi dans le groupe formé par l'amidure de sodium, de potassium ou de lithium et d'un sel alcalin dont le cation est choisi dans le groupe formé par le potassium, le lithium ou le sodium et dont l'anion est choisi dans le groupe formé par les anions thiocyanate, nitrite, cyanure ou cyanate, le rapport molaire amidure alcalin/sel associé étant au moins égal à 1.

La demanderesse a en effet découvert que les sels alcalins cités plus haut avaient un pouvoir d'exaltation étonnamment prononcé envers les amidures alcalins en tant qu'amorceurs de polymérisation.

BIEHL et Coll. ont, certes, déjà signalé dans Journal of Organic Chemistry, vol. 35, n° 7, 1970, page 2 454, que l'association d'un amidure alcalin avec un certain nombre de sels parmi lesquels les nitrites et les thiocyanates permet l'activation de celui-ci dans la réaction de condensation arynique en utilisant comme solvant la diméthylamine.

Toutefois, si on teste l'activité de l'association telle que amidure de sodium-nitrite de sodium en tant que catalyseur basique de la réaction de formation de l'anion triphénylméthyle dans le THF, qui est connu pour être un bon solvant de polymérisation anionique, à partir du triphénylméthane, on constate que cette association n'est guère plus active que l'amidure de sodium employé seul.

Il convient de remarquer, de plus, que dans les réactions de chimie organique qui viennent d'être envisagées on utilise une grande quantité de catalyseurs basiques par rapport aux réactifs eux-mêmes.

Selon une variante préférée de l'invention on utilise de 1,5 à 3 moles d'amidure alcalin par mole de sel alcalin associé. Toutefois on peut utiliser indifféremment un fort excès d'amidure par rapport au sel associé par exemple on peut employer jusqu'à 10 moles d'amidure par mole de sel associé.

Les solvants utilisables pour préparer les amorceurs selon l'invention doivent être aprotiques et peuvent être polaires, faiblement polaires ou même apolaires. On peut utiliser des solvants polaires pour autant que leur structure ne les rendent pas susceptibles à l'action des bases complexes utilisées selon l'invention. Ainsi l'hexaméthyl-phosphotriamide (HMPT) peut être utilisé jusqu'à environ 25 °C mais, par exemple, le diméthylsulfoxyde (DMSO), le diméthyl formamide (DMF) ou la N-méthylpyrrolidone sont dégradés par les bases complexes et doivent être de préférence évités. Les solvants polaires sont, de

toutes façons, dans le domaine concerné par l'invention, d'un faible intérêt économique et industriel. D'autres solvants aprotiques de polarité nettement moindre peuvent être utilisés, par exemple la pyridine ($\varepsilon$ = 12,3 à 25 °C), bien qu'ils puissent subir une dégradation au bout d'un certain temps, notamment si la température est quelque peu élevée.

Les solvants aprotiques peu polaires (de constante diélectrique inférieure ou égale à 10 à 25 °C) conviennent particulièrement bien pour préparer les amorceurs selon l'invention. Ainsi les éthers et polyéthers linéaires ou cycliques tels que le tétrahydrofuranne (THF), le diméthoxyéthane (DME), donnent de bons résultats, généralement dans un temps très court. Les glymes conviennent également.

Toutefois, et c'est là un avantage appréciable des amorceurs selon l'invention, on peut également les préparer facilement dans un solvant apolaire qui peut être le même que celui où, avantageusement, on effectue la polymérisation ultérieure. On peut ainsi utiliser des alcanes ou des cycloalcanes tels que l'hexane, l'heptane ou le cyclohexane ou des arènes tels que le benzène ou le toluène.

Lorsqu'on utilise des solvants comportant des ponts éthers, il est important de procéder soigneusement à l'élimination de l'oxygène et des peroxydes contenus, par des méthodes connues.

Selon une seconde variante de l'invention les amorceurs sont préparés en utilisant comme solvant le monomère à polymériser. Dans ce cas la polymérisation s'effectue en masse.

On a en effet découvert et c'est là un autre aspect surprenant de la présente invention qu'on peut préparer les amorceurs selon l'invention en absence de tout solvant autre que le monomère lui-même et ceci sans que l'activité de l'amorceur s'en trouve sensiblement modifiée.

La préparation des amorceurs selon l'invention peut s'effectuer à l'aide de plusieurs méthodes sensiblement équivalentes puisqu'il s'agit de mettre en présence l'amidure alcalin et le sel associé dans un solvant.

Par exemple, on peut d'abord introduire dans le réacteur, sous agitation, le solvant, puis l'amidure alcalin et enfin le sel associé.

On peut également ajouter une suspension de l'amidure alcalin dans un solvant à une solution-suspension de sel associé dans le même solvant ou un solvant miscible à ce dernier.

Ou bien, on peut placer le sel associé et l'amidure dans le réacteur et verser ensuite le solvant par dessus.

L'amidure alcalin est de préférence employé broyé à l'état de particules dont la taille moyenne est fonction de la taille du réacteur de polymérisation, la taille des particules étant de préférence d'autant plus grande que la taille du réacteur est elle-même importante. Le broyage peut être effectué en présence d'une petite quantité de solvant peu polaire aprotique.

L'amidure alcalin utilisé peut être de qualité pour analyse ou de pureté commerciale. Il peut renfermer une certaine proportion de soude, dans la mesure où cette proportion est assez bien connue de manière à ce qu'on puisse préparer l'amorceur avec des proportions de réactifs tels que préconisées plus haut.

En ce qui concerne l'humidité, il convient de la chasser des réactifs, solvants et appareillages utilisés. Toutefois, il faut noter que le prix de l'amidure de sodium, autorise une dessication moins poussée que dans la préparation des amorceurs connus. En effet, l'utilisation d'un léger excès d'amidure alcalin permet d'éliminer les traces d'humidité d'une manière très suffisante, par réaction dudit amidure sur lesdites traces d'humidité pour former des produits ne nuisant pas à la réaction de formation de l'amorceur, ou, par la suite, à la réaction de polymérisation.

La réaction de formation de l'amorceur est avantageusement effectuée, dans certains cas, dans le réacteur qui sert ensuite à la polymérisation, car cela permet de réduire l'introduction d'eau dans l'appareillage. Cette réaction est effectuée de préférence à une température de 20 à 60 °C. On peut opérer à une température plus basse mais la réaction de formation devient d'autant plus longue, jusqu'à être inexistante, en général, en dessous de 0 °C. On peut aussi opérer à plus haute température mais alors les risques de dégradation de l'amidure alcalin ou du solvant augmentent. Il est recommandé d'agiter le milieu.

Dans la plupart des cas, la durée de la réaction de formation de l'amorceur est d'au moins 1 heure mais n'excède pas 4 heures. Toutefois, un chauffage beaucoup plus prolongé peut s'avérer nécessaire dans des cas rebelles.

Enfin, il convient de noter que les amorceurs selon l'invention sont d'une souplesse d'emploi rarement rencontrée parmi les amorceurs antérieurement connus. En effet, si l'on doit préparer pour des raisons de commodité ou de nécessité l'amorceur dans un solvant qui n'est pas le même que celui où la polymérisation est ultérieurement effectuée, on se heurte généralement ensuite à des difficultés : en effet, la polarité du milieu est modifiée et, par exemple, la microstructure du polymère obtenu n'est pas conforme à l'attente. Au contraire, les amorceurs selon l'invention peuvent être préparés dans un premier solvant, par exemple un solvant peu polaire, puis ledit solvant est évaporé sous vide presque totalement et enfin un second solvant, par exemple apolaire, où l'on souhaite effectuer la polymérisation est introduit sur l'amorceur dont les propriétés sont demeurées intactes. L'invention permet donc de se placer dans des conditions idéales fixées à l'avance pour réaliser la polymérisation.

Par ailleurs on doit bien apprécier que la formation des amorceurs selon l'invention ne s'accompagne d'aucun dégagement gazeux qui pourraient créer une surpression inutile, voire gênante, dans le réacteur. De plus, les amorceurs selon l'invention sont faciles à préparer du fait de l'état solide des

matières premières dont ils sont issus. Enfin aucun peroxyde organique, dont la présence est extrêmement gênante en polymérisation anionique activée, ne peut provenir de l'introduction des sels associés qui ne sauraient normalement en contenir.

Comme pour toutes les polymérisations anioniques il convient d'utiliser des réactifs, des solvants et des appareillages secs. Toutefois cette contrainte qui conditionne la réussite de la polymérisation est moins durement ressentie lorsqu'on utilise le procédé selon l'invention étant donnée la propriété que possède l'amidure alcalin, produit peu coûteux, de réagir avec les traces d'humidité pour donner des produits qui ne gênent pas la suite de la réaction.

La terminaison de la réaction peut être réalisée de manière connue par exemple par introduction d'un agent protonant tel qu'un alcool (le méthanol ou l'hexanol). On précipite ensuite le milieu réactionnel dans le méthanol ou l'hexane.

La purification des solvants et des réactifs est évidemment souhaitable. Les solvants qui sont les mêmes que ceux où la base complexe peut être formée, ce qui regroupe notamment les solvants de constante diélectrique inférieure ou égale à 10 à 25 °C, sont purifiés d'une manière connue des spécialistes de la polymérisation. On peut donc procéder, par exemple, par distillation sur de la soude ou de la potasse solides puis sur sodium et enfin terminer par séchage sur fils de sodium. Les monomères, quant à eux, sont purifiés d'une manière connue et habituelle qui dépend de leur nature et qui peut aller de la simple distillation à la double distillation, sur tamis moléculaires, hydrure de calcium, métal alcalin ou même sur polymère vivant (polyisopropényl-lithium).

L'invention concerne également un procédé de polymérisation caractérisé en ce qu'on utilise un amorceur comme il vient d'être décrit.

Le procédé de polymérisation selon l'invention consiste donc à utiliser comme amorceur l'association d'un amidure alcalin choisi dans le groupe formé par l'amidure de sodium, de potassium ou de lithium avec au moins un sel choisi dans le groupe constitué par les nitrites, les cyanates, les thiocyanates et les cyanures alcalins en l'absence ou en présence d'un solvant.

Le procédé selon l'invention est particulièrement, quoique pas uniquement, intéressant lorsqu'on utilise un nitrite ou un thiocyanate alcalin comme sel associé. Il a, en effet été découvert que pour un amidure alcalin fixé et un métal alcalin du sel associé, également fixé, l'efficacité de l'amorceur augmentait selon la séquence

$$CN^- < OCN^- < SCN^- \simeq NO_2^-$$

Ceci est un résultat particulièrement surprenant si l'on tient compte du fait que d'une part BIEHL et Coll. (op. cit.) n'ont montré que le pouvoir exaltant de certains sels vis-à-vis des amidures alcalins que pour une réaction particulière de la chimie organique et qu'en présence de solvants (diméthylamine) impropres à la polymérisation anionique et que, d'autre part, l'un des sels préférés dans le procédé selon l'invention, se révèle pratiquement inefficace dans une autre réaction (test du triphénylméthane) qui est effectuée dans le THF qui est un des solvants préférés de la polymérisation anionique. L'homme de l'art en polymérisation anionique ne pouvait donc que douter de la possibilité d'application des associations, selon l'invention dans son domaine et en aucun cas ne pouvait en prévoir la bonne efficacité. Ceci d'autant plus que la faible activité des associations selon l'invention dans les milieux nécessaires à la polymérisation ne pouvait qu'être renforcée par le fait qu'en polymérisation anionique on doit utiliser des quantités d'amorceurs basiques au moins 1 000 fois plus faibles que dans les réactions de chimie organique de synthèse.

Il est aussi possible d'associer l'amidure alcalin à un mélange d'activants dont les proportions respectives peuvent varier sensiblement sans affecter le résultat de la réaction de polymérisation.

Par ailleurs, il a également été trouvé avantageux notamment en ce qui concerne le rendement, d'associer un amidure d'un métal alcalin avec un sel d'un métal alcalin différent. Et ceci, d'autant plus que la différence entre les rayons ioniques des cations est grande.

Toutefois, en général, le choix de cations différents a moins d'influence que le choix de l'anion associé.

En revanche, les effets avantageux résultant du choix de cations différents et d'anions préférés (nitrite ou thiocyanate) sont généralement cumulables.

De fait les variantes préférentielles du procédé selon l'invention consistent à utiliser l'un des amorceurs suivants :

— $NaNH_2$, $NaNO_2$
— $NaNH_2$, NaSCN
— $KNH_2$, $KNO_2$
— $KNH_2$, KSCN
— $NaNH_2$, $KNO_2$
— $NaNH_2$, KSCN
— $KNH_2$, $NaNO_2$
— $KNH_2$, NaSCN
— $LiNH_2$, KSCN
— $LiNH_2$, $KNO_2$.

Les monomères intéressés par l'invention sont, comme cela a déjà été dit, ceux dont il est connu qu'ils polymérisent par un mécanisme purement anionique, ou, si l'on préfère, qui sont susceptibles de polymériser anioniquement par ouverture d'une double liaison éthylénique ou d'un hétérocycle. Compte tenu que les débuts de la polymérisation anionique remontent à plus d'un siècle, on conçoit que la liste de ces monomères est fort longue, et ce mécanisme est très bien connu. Il convient toutefois de bien voir que ce mécanisme est le même que le monomère soit un hétérocycle ou qu'il comporte une insaturation éthylénique ou aldéhydique (qui peut être considérée comme hétérocycle à deux atomes), puisque l'amorçage donne lieu par coupure d'une liaison à la formation d'un centre-actif lequel, quelle que soit la nature de l'atome qui porte la charge négative, attaque une nouvelle molécule de monomère qui porte à son tour la charge négative et ainsi de suite, jusqu'à épuisement du monomère ou terminaisons de la réaction. On peut consulter à ce sujet par exemple l'ouvrage du Professeur Georges CHAMPETIER « Chimie Macromoléculaire », Volume I, Editions Hermann, Paris (1969).

Comme monomères concernés on peut toutefois citer les monomères suivants, sans que cette liste prétende être exhaustive.

Pour les monomères vinyliques, ceux de formule générale

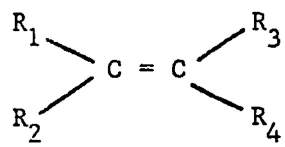

$R_1 = R_2 = R_3 = H$ et $R_4 =$ alkyle

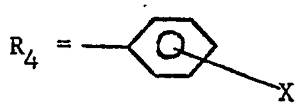

où X = H, Cl, $OCH_3$ ou $C(CH_3)_3$

$R_4 =$ 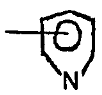 , $-C{\equiv}N$, $-\underset{\overset{\|}{O}}{C}-O-R'$ (où R' : alkyle ou cycloalkyle),

$-\underset{\overset{\|}{O}}{C}-R'$

$R_4 = O-\underset{\overset{\|}{O}}{C}-O-R$ (où R = alkyle, notamment méthyle, ou aryle, notamment phényle)

$R_1 = R_2 = H$,
$R_3 = -CH_3$,
$R_4 =$ phényle, cyano ou $-\underset{\overset{\|}{O}}{C}-OR'$ (R' = alkyle ou cycloalkyle).

Pour les monomères hétérocycliques, les oxydes d'alkylène, les sulfures d'alkylène, les lactones, les lactames, les thiéthanes, les carbonates cycliques, tels que l'oxyde d'éthylène, l'oxyde de propylène, le sulfure de propylène, la β-propiolactone, l'ε-caprolactone, la pivalolactone, l'ε-caprolactame, le carbonate de propylène glycol, le carbonate de néopentyl glycol.

Pour les monomères diéniques conjugués, ceux de formule générale :

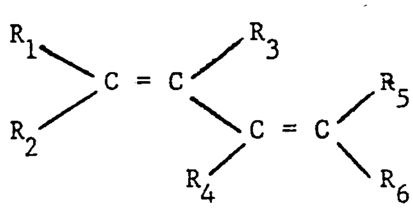

où

$R_1 = R_2 = R_3 = R_4 = R_5 = R_6 = H$ (butadiène-1,3)
$R_1 = R_2 = R_4 = R_5 = R_6 = H$ et $R_3 =$ alkyle ou aryle
$R_1 = R_2 = R_3 = R_4 = R_5 = H$ et $R_6 =$ alkyle, aryle, nitrile ou nitro
$R_1 = R_2 = R_5 = R_6 = H$ et $R_3 = R_4 = -CH_3$

$R_1 = CH_3$ et $R_2 = R_3 = R_4 = R_5 = R_6 = H$ ou alkyle
$R_1 = R_3 = R_4 = R_5 = H$ et $R_1 = R_6$ = phényle.

Pour les diènes à doubles liaisons éthyléniques non directement conjuguées, le divinylbenzène, les cyclohexadiènes substitués tels que le tétraméthyl-3,3,6,6 hexadiène-1,2,-4,5, les carbonates de vinyle ou d'allyle de polyols ou de polyéthers polyols tels que le carbonate d'allyle diglycol.

Le procédé selon l'invention est applicable aux réactions d'homopolymérisation et aux réactions de copolymérisation, soit de monomères de la même famille soit de monomères de familles différentes.

Le procédé de polymérisation selon l'invention s'effectue dans des conditions classiques en ce qui concerne l'atmosphère qui doit règner dans le réacteur : la réaction est ainsi effectuée sous vide ou sous atmosphère de gaz inerte tel que l'azote ou l'argon.

La température à laquelle on effectue la polymérisation n'est pas nécessairement la même que celle à laquelle on a préparé l'amorceur et peut être comprise entre − 80 °C et + 70 °C.

Par ailleurs, on peut faire varier la température lors de la polymérisation ce qui est particulièrement apprécié lors des copolymérisations pour obtenir une certaine distribution des espèces copolymérisées ou telle microsctructure particulière ou encore une cinétique de réaction plus rapide.

La quantité d'amorceur requise par le procédé dépend évidemment, d'une manière générale, de la masse moléculaire moyenne qu'on désire atteindre. Par exemple, un rapport molaire amidure/monomère de l'ordre de 0,1 à 1 % peut être utilisé mais il convient d'insister sur le fait qu'on peut utiliser un rapport plus élevé, d'autant plus que l'amidure est relativement peu coûteux.

La durée de la réaction de polymérisation dépend de très nombreux facteurs. Elle varie, de quelques secondes à 24 et même 48 heures.

Dans les exemples suivants qui sont donnés à titre d'illustration de l'invention et ne doivent pas être considérés comme limitant la portée de cette dernière, on a notamment insisté sur la variété des possibilités offertes par les amorceurs conformes à l'invention ainsi que sur de nombreuses variantes de procédé mentionnées dans la description précédente. D'autres aspects faisant intégralement partie de l'invention sont également décrits dans lesdits exemples suivants.

Exemple de préparation des amorceurs

Dans un ballon réactionnel préalablement séché on effectue un balayage à l'argon, puis on introduit $25 \cdot 10^{-3}$ moles de $NaNH_2$ et $16,6 \cdot 10^{-3}$ moles de sel alcalin ($NaNO_2$, NaSCN, NaCN ou KSCN) dans 20 ml de solvant tels que le THF ou le toluène. On chauffe l'ensemble pendant 2 heures à 50 °C. Le solvant est soit conservé si l'on veut effectuer la polymérisation anionique dans le même solvant, soit éliminé si l'on veut effectuer la polymérisation anionique en masse ou dans un autre solvant.

Tous les amorceurs sont préparés selon le même procédé.

Exemples 1 à 20 : Polymérisation anionique du styrène

Dans le ballon réactionnel où l'amorceur a été préparé on introduit $10^{-1}$ mole de styrène. La solution est ensuite chauffée pendant un temps déterminé, puis la réaction est arrêtée par précipitation du polymère au moyen de méthanol. Les résultats obtenus sont réunis dans les tableaux suivants :

TABLEAU 1

Les essais ont été effectués dans 20 ml de toluène en utilisant comme amidure alcalin l'amidure de sodium et un activant. R est le rapport molaire amidure/activant

| N°s | Activant | T | 0 °C | Rdt | $\overline{Mn}$ | $\overline{Mp}$ | $\overline{Mp}/\overline{Mn}$ |
|---|---|---|---|---|---|---|---|
| 1 | $KNO_2$ 3mM (R = 6) | 18 h | 50 °C | 33 % | 3 000 | 20 000 | 6,7 |
| 2 | NaCN 3mM (R = 6) | 18 h | 50 °C | 11 % | 4 000 | 50 000 | 12 |
| 3 | NaSCN 8mM (R = 6) | 24 h | 60 °C | 5 % | 13 000 | 75 000 | 6 |
| 4 | $NaNO_2$ 3mM (R = 6) | 18 h | 50 °C | 45 % | 5 500 | 12 000 | 2,2 |
| 5 | NaSCN 3mM (R = 6) | 18 h | 50 °C | 49 % | 3 000 | 10 000 | 3,3 |

TABLEAU 2

Les essais ont été effectués dans 20 ml de toluène en utilisant comme amidure alcalin l'amidure de potassium, et un activant à une température de 50 °C pendant 18 heures. R est le rapport molaire amidure/activant

| N°s | Activant | Rendement | $\overline{Mn}$ | $\overline{Mp}$ | $\overline{Mp}/\overline{Mn}$ |
|---|---|---|---|---|---|
| 6 | KCN 3mM (R = 2) | 27 % | 2 650 | 5 500 | 2 |
| 7 | KOCN 3mM (R = 2) | 15 % | 4 000 | 45 000 | 11 |
| 8 | KSCN 3mM (R = 2) | 30 % | 4 500 | 45 000 | 10 |
| 9 | $NaNO_2$ 3mM (R = 6) | 45 % | 5 600 | 11 950 | 2,1 |
| 10 | NaSCN 3mM (R = 6) | 49 % | 3 000 | 9 600 | 3,2 |
| 11 | $KNO_2$ 3mM (R = 6) | 33 % | 3 140 | 18 900 | 6,0 |
| 12 | NaCN 3mM (R = 6) | 11 % | 4 040 | 53 150 | 3,1 |

TABLEAU 3

Les essais ont été effectués dans 40 ml de THF en utilisant $16 \cdot 10^{-3}$ mole d'amidure de sodium, $8 \cdot 10^{-3}$ moles d'activant, à une température de 50 °C.

| N°s | Activant | T | Rendement | $\overline{Mn}$ | $\overline{Mp}$ | $\overline{Mp}/\overline{Mn}$ |
|---|---|---|---|---|---|---|
| 13 | KSCN | 6 h | 100 % | 28 000 | 400 000 | 14 |
| 14 | $NaNO_2$ | 22 h | 100 % | 12 000 | 80 000 | 6,7 |
| 15 | $KNO_2$ | 5 h | 100 % | 60 000 | 650 000 | 11 |
| 16 | KCN | 24 h | 90 % | 10 000 | 20 000 | 2 |
| 17 | NaCN | 24 h | 11 % | 45 000 | 450 000 | 10 |
| 18 | KOCN | 20 h | 3 % | 14 500 | 100 000 | 7 |
| 19 | NaSCN | 7 h 30 | 56 % | 6 500 | 50 000 | 8 |
| 20 | KSCN (seul) | 24 h | 4 % | 20 000 | 73 000 | 3,7 |

Exemples 21 à 47 : Polymérisation anionique de la vinyl-2 pyridine

TABLEAU 4

Les essais ont été effectués avec $10^{-1}$ mole de vinyl-2 pyridine dans 20 ml de toluène en utilisant $25 \cdot 10^{-3}$ mole d'amidure de sodium et $12{,}5 \cdot 10^{-3}$ mole d'activant à une température de 40 °C

| Exemple | Activant | T | Rendement | $\overline{Mn}$ |
|---|---|---|---|---|
| 21 | $NaNO_2$ | 4 h | 50 % | 4 100 |
| 22 | $KNO_2$ | 5 h | 58 % | 5 600 |
| 23 | NaSCN | 18 h | 60 % | 4 800 |
| 24 | KCNO | 18 h | 53 % | 3 900 |
| 25 | NaCNO | 18 h | 50 % | 3 000 |
| 26 | NaCN | 18 h | 39 % | 2 200 |

TABLEAU 5

Les essais ont été effectués avec $10^{-1}$ mole de vinyl-2 pyridine dans 20 ml de THF en utilisant $25 \cdot 10^{-3}$ mole d'amidure de sodium et $12{,}5 \cdot 10^{-3}$ mole d'activant à une température de 40 °C.

| Exemple | Activant | T | Rendement | $\overline{Mn}$ |
|---|---|---|---|---|
| 27 | $NaNO_2$ | 4 h | 60 % | 4 900 |
| 28 | $KNO_2$ | 4 h | 70 % | 7 300 |
| 29 | NaSCN | 18 h | 65 % | 4 300 |
| 30 | KCNO | 18 h | 62 % | 4 000 |
| 31 | NaCNO | 18 h | 60 % | 3 700 |
| 32 | NaCN | 18 h | 57 % | 3 000 |

TABLEAU 6

Les essais ont été effectués, en masse, avec $10^{-1}$ mole de vinyl-2 pyridine en utilisant $25 \cdot 10^{-3}$ mole d'amidure de sodium et $12{,}5 \cdot 10^{-3}$ moles d'activant à une température de 40 °C.

| Exemple | Activant | T | Rendement | $\overline{Mn}$ |
|---|---|---|---|---|
| 33 | $NaNO_2$ | 1 h | 60 % | 4 600 |
| 34 | $KNO_2$ | 1 h | 57 % | 6 300 |
| 35 | NaSCN | 3 h | 48 % | 5 000 |
| 36 | KCNO | 3 h | 52 % | 4 800 |
| 37 | NaCNO | 3 h | 39 % | 4 000 |
| 38 | NaCN | 5 h | 28 % | 3 700 |

TABLEAU 7

Les essais ont été effectués avec $10^{-1}$ mole de vinyl-2 pyridine en utilisant $25 \cdot 10^{-3}$ mole d'amidure alcalin et $12{,}5 \cdot 10^{-3}$ mole d'activant, dans 30 ml de différents solvants, à une température de 40 °C pendant 18 heures.

| Exemple | Activant | Solvant | Rendement | $\overline{Mn}$ |
|---|---|---|---|---|
| 39 | $NaNO_2$ | Hexane | 47 % | 4 000 |
| 40 | NaCNO | Hexane | 40 % | 3 800 |
| 41 | NaCN | Hexane | 33 % | 2 900 |
| 42 | $NaNO_2$ | Pyridine | 25 % | 1 700 |
| 43 | NaCN | Pyridine | 20 % | 1 500 |
| 44 | NaCN | DME | 68 % | 7 000 |
| 45 | $NaNO_2$ | DME | 70 % | 6 700 |
| 46 | NaCNO | DME | 63 % | 5 300 |

Exemples 47 à 66 : Polymérisation anionique de l'α-méthyl styrène

Le mode opératoire est le même que pour le styrène. Les résultats obtenus sont réunis dans les tableaux suivants :

TABLEAU 8

Les essais de polymérisation ont été effectués avec $10^{-1}$ mole d'α-méthyl styrène dans 20 ml de toluène en utilisant $25 \cdot 10^{-3}$ mole d'amidure de sodium et $12{,}5 \cdot 10^{-3}$ mole d'activant à une température de 40 °C pendant 4 heures.

| Exemple | Activant | Rendement | $\overline{Mn}$ |
|---|---|---|---|
| 47 | $NaNO_2$ | 45 % | 450 |
| 48 | $KNO_2$ | 50 % | 700 |
| 49 | NaSCN | 30 % | 520 |
| 50 | KCNO | 30 % | 420 |
| 51 | NaCN | 10 % | 300 |
| 52 | NaCNO | 25 % | 360 |
| 53 | NaCN | 9 % | 310 |

TABLEAU 9

Les essais ont été effectués avec $10^{-1}$ mole d'α-méthyl styrène dans 20 ml de THF en utilisant $25 \cdot 10^{-3}$ mole d'amidure de sodium et $12 \cdot 10^{-3}$ mole d'activant à une température de 40 °C pendant 4 heures.

| Exemple | Activant | Rendement | $\overline{Mn}$ |
|---|---|---|---|
| 54 | $NaNO_2$ | 40 % | 600 |
| 55 | $KNO_2$ | 55 % | 830 |
| 56 | NaSCN | 37 % | 500 |
| 57 | KCNO | 35 % | 380 |
| 58 | NaCN | 17 % | 340 |
| 59 | NaCNO | 30 % | 400 |
| 60 | NaCN | 23 % | 335 |

TABLEAU 10

Les essais de polymérisation ont été effectués avec $10^{-1}$ mole d'α-méthyl styrène, en masse, en utilisant $25 \cdot 10^{-3}$ mole d'amidure de sodium et $12,5 \cdot 10^{-3}$ mole d'activant à une température de 40 °C.

| Exemple | Activant | T | Rendement | $\overline{Mn}$ |
|---|---|---|---|---|
| 61 | $NaNO_2$ | 4 h | 60 % | 800 |
| 62 | $KNO_2$ | 4 h | 47 % | 1 200 |
| 63 | NaSCN | 18 h | 35 % | 680 |
| 64 | KCNO | 18 h | 38 % | 590 |
| 65 | NaCNO | 18 h | 35 % | 610 |
| 66 | NaCN | 18 h | 30 % | 420 |

Exemples 67 à 102 : Polymérisation anionique de l'acrylonitrile

Le mode opératoire est le même que pour le styrène. Les résultats obtenus sont réunis dans les tableaux suivants :

TABLEAU 11

Les essais de polymérisation ont été effectués avec $5 \cdot 10^{-2}$ mole d'acrylonitrile, en masse, en utilisant $25 \cdot 10^{-3}$ mole d'amidure de sodium et $12,5 \cdot 10^{-3}$ mole d'activant à une température de 35 °C.

| Exemple | Activant | T | Rendement | $\overline{Mn}$ |
|---|---|---|---|---|
| 67 | $NaNO_2$ | 10 mn | 80 % | 5 000 |
| 68 | $KNO_2$ | 15 mn | 88 % | 5 500 |
| 69 | NaSCN | 20 mn | 75 % | 4 600 |
| 70 | KCNO | 15 mn | 80 % | 3 900 |
| 71 | NaCNO | 15 mn | 80 % | 4 200 |
| 72 | NaCN | 20 mn | 70 % | 3 800 |

TABLEAU 12

Les essais ont été effectués avec $5 \cdot 10^{-2}$ mole d'acrylonitrile dans 20 ml de THF en utilisant $25 \cdot 10^{-3}$ mole d'amidure de sodium et $12,5 \cdot 10^{-3}$ mole d'activant à une température de 40 °C.

| Exemple | Activant | T | Rendement | $\overline{Mn}$ |
|---|---|---|---|---|
| 73 | $NaNO_2$ | 20 mn | 100 % | 6 300 |
| 74 | $KNO_2$ | 20 mn | 100 % | 7 000 |
| 75 | NaSCN | 20 mn | 100 % | 4 200 |
| 76 | KCNO | 1 h | 90 % | 5 400 |
| 77 | NaCNO | 1 h | 90 % | 4 900 |
| 78 | NaCN | 1 h | 90 % | 4 700 |

TABLEAU 13

Les essais ont été effectués avec $5 \cdot 10^{-2}$ moles d'acrylonitrile dans 20 ml de toluène en utilisant $25 \cdot 10^{-3}$ mole d'amidure de sodium et $12{,}5 \cdot 10^{-3}$ mole d'activant à une température de 40 °C.

| Exemple | Activant | T | Rendement | $\overline{Mn}$ |
|---|---|---|---|---|
| 79 | $NaNO_2$ | 30 mn | 90 % | 4 000 |
| 80 | $KNO_2$ | 30 mn | 88 % | 4 700 |
| 81 | NaSCN | 40 mn | 80 % | 3 800 |
| 82 | KCNO | 1 h | 87 % | 2 900 |
| 83 | NaCNO | 1 h | 79 % | 3 300 |
| 84 | NaCN | 2 h | 63 % | 2 400 |

TABLEAU 14

Les essais ont été effectués avec $5 \cdot 10^{-2}$ mole d'acrylonitrile dans 20 ml de THF en utilisant $25 \cdot 10^{-3}$ mole de $LiNH_2$ et 12,5 mole d'activant, à une température de 40 °C pendant 18 heures.

| Exemple | Activant | Rendement | $\overline{Mn}$ |
|---|---|---|---|
| 85 | NaSCN | 20 % | 2 700 |
| 86 | $NaNO_2$ | 25 % | 5 200 |
| 87 | KCNO | 17 % | 4 300 |
| 88 | $KNO_2$ | 35 % | 6 200 |
| 89 | NaCNO | 15 % | 4 000 |
| 90 | NaCN | 10 % | 2 500 |

TABLEAU 15

Les essais ont été effectués avec $5 \cdot 10^{-2}$ mole d'acrylonitrile en masse, en utilisant $25 \cdot 10^{-3}$ mole d'amidure de lithium et 12,5 mole d'activant, à une température de 40 °C pendant 18 heures.

| Exemple | Activant | Rendement | $\overline{Mn}$ |
|---|---|---|---|
| 91 | NaSCN | 38 % | 5 800 |
| 92 | $NaNO_2$ | 40 % | 6 400 |
| 93 | KCNO | 45 % | 7 000 |
| 94 | $KNO_2$ | 68 % | 9 300 |
| 95 | NaCNO | 40 % | 6 000 |
| 96 | NaCN | 22 % | 2 900 |

TABLEAU 16

Les essais ont été effectués avec $5 \cdot 10^{-2}$ mole d'acrylonitrile, dans 20 ml de toluène, en utilisant $25 \cdot 10^{-3}$ mole d'amidure de lithium et $12{,}5 \cdot 10^{-3}$ mole d'activant, à une température de 40 °C pendant 18 heures.

| Exemple | Activant | Rendement | $\overline{Mn}$ |
|---|---|---|---|
| 97 | NaSCN | 20 % | 4 000 |
| 98 | $NaNO_2$ | 15 % | 2 900 |
| 99 | KCNO | 12 % | 3 600 |
| 100 | $KNO_2$ | 28 % | 4 200 |
| 101 | NaCNO | 10 % | 3 200 |
| 102 | NaCN | 7 % | 1 850 |

Exemples 103 à 114 : Polymérisation du méthacrylate de méthyle

Le mode opératoire est le même que pour le styrène. Les résultats obtenus sont réunis dans les tableaux suivants :

TABLEAU 17

Les essais ont été effectués avec $10^{-1}$ mole de méthacrylate de méthyle dans 30 ml de THF, en utilisant $25 \cdot 10^{-3}$ mole d'amidure de sodium et $12{,}5 \cdot 10^{-3}$ mole d'activant, à une température de 35 °C.

| Exemple | Activant | T | Rdt % | $\overline{Mn}$ | $\overline{Mp}$ | $\overline{Mp}/\overline{Mn}$ |
|---|---|---|---|---|---|---|
| 103 | $NaNO_2$ $12{,}5 \cdot 10^{-3}$ mole | 18 h | 100 | 14 000 | 22 000 | 1,56 |
| 104 | $KNO_2$ $12{,}5 \cdot 10^{-3}$ mole | 2 h | 100 | 12 400 | 25 700 | 2,1 |
| 105 | NaSCN $12{,}5 \cdot 10^{-3}$ mole | 3 h | 100 | 10 000 | 25 000 | 2,5 |
| 106 | KCNO $12{,}5 \cdot 10^{-3}$ mole | 1 h 30 | 100 | 41 100 | 109 300 | 2,66 |

TABLEAU 18

Les essais ont été effectués avec $10^{-1}$ mole de méthacrylate de méthyle dans 30 ml de toluène, en utilisant $25 \cdot 10^{-3}$ mole d'amidure de sodium et $12{,}5 \cdot 10^{-3}$ mole d'activant, à une température de 35 °C.

| Exemple | Activant | T | Rdt % | $\overline{Mn}$ | $\overline{Mp}$ | $\overline{Mp}/\overline{Mn}$ |
|---|---|---|---|---|---|---|
| 107 | $NaNO_2$ $12{,}5 \cdot 10^{-3}$ mole | 2 h | 100 | 41 000 | 195 600 | 4,77 |
| 108 | $KNO_2$ $12{,}5 \cdot 10^{-3}$ mole | 2 h | 100 | 27 700 | 82 600 | 2,98 |
| 109 | NaSCN $12{,}5 \cdot 10^{-3}$ mole | 2 h | 100 | 19 000 | 87 000 | 1,95 |
| 110 | KCNO $12{,}5 \cdot 10^{-3}$ mole | 1 h 30 | 100 | 61 600 | 254 400 | 4,13 |

TABLEAU 19

Les essais ont été effectués avec $10^{-1}$ mole de méthacrylate de méthyle, en masse, en utilisant dans l'exemple $25 \cdot 10^{-3}$ mole d'amidure de sodium sans activant et, dans les exemples, avec $12{,}5 \cdot 10^{-3}$ mole d'activant.

| Exemple | Activant | 0 °C | T | Rdt % | $\overline{Mn}$ | $\overline{Mp}$ | $\overline{Mn}/\overline{Mp}$ |
|---|---|---|---|---|---|---|---|
| 111 | $NaNO_2$ $12{,}5 \cdot 10^{-3}$ mole | 35 | 45 mn | 100 | 33 600 | 113 000 | 3,36 |
| 112 | $KNO_2$ $12{,}5 \cdot 10^{-3}$ mole | 40 | 30 mn | 100 | 24 500 | 45 600 | 1,86 |
| 113 | NaSCN $12{,}5 \cdot 10^{-3}$ mole | 40 | 55 mn | 100 | 13 700 | 24 500 | 1,79 |
| 114 | KCNO $12{,}5 \cdot 10^{-3}$ mole | 35 | 15 mn | 100 | 47 000 | 138 400 | 2,95 |

On a effectué des déterminations de microstructures sur le produit qui résulte de la polymérisation du méthacrylate de méthyle en utilisant comme amorceur l'amidure de sodium et un sel associé.

Les résultats sont indiqués dans le tableau ci-dessous.

TABLEAU 20

| Activant | Solvant | RMN | | |
|---|---|---|---|---|
| | | T | H | S |
| $NaNO_2$ | THF | 11,8 | 56,6 | 31,5 |
| NaSCN | THF | 21,1 | 53,9 | 25,0 |
| $NaNO_2$ | Toluène | 36,5 | 44 | 19,5 |
| $KNO_2$ | Toluène | 26,5 | 52,1 | 21,4 |
| KCNO | Toluène | 22,4 | 51,7 | 25,9 |

Exemples 115 à 140 : Polymérisation du méthacrylonitrile

Le mode opératoire est le même que pour le styrène. Les résultats obtenus sont réunis dans les tableaux suivants.

TABLEAU 21

Les essais ont été effectués avec $10^{-1}$ mole de méthacrylonitrile, dans 30 ml de THF, en utilisant $25 \cdot 10^{-3}$ mole d'amidure de sodium et $12,5 \cdot 10^{-3}$ mole d'activant, à une température de 35 °C.

| Exemple | Activant | 0 °C | T | Rdt % | $\overline{Mn}$ |
|---|---|---|---|---|---|
| 115 | $NaNO_2$ $12,5 \cdot 10^{-3}$ mole | 35 | 10 mn | 100 | 20 000 |
| 116 | $KNO_2$ $12,5 \cdot 10^{-3}$ mole | 35 | 15 mn | 90 | 16 000 |
| 117 | NaSCN $12,5 \cdot 10^{-3}$ mole | 35 | 30 mn | 80 | 12 000 |
| 118 | KCNO $12,5 \cdot 10^{-3}$ mole | 35 | 10 mn | 90 | 17 000 |

TABLEAU 22

Les essais de polymérisation ont été effectués avec $10^{-1}$ mole de méthacrylonitrile, dans 30 ml de toluène, en utilisant $25 \cdot 10^{-3}$ mole d'amidure de sodium et $12,5 \cdot 10^{-3}$ mole d'activant, à une température de 35 °C.

| Exemple | Activant | T | Rdt % | $\overline{Mn}$ |
|---|---|---|---|---|
| 119 | $NaNO_2$ $12,5 \cdot 10^{-3}$ mole | 20 mn | 85 | 18 000 |
| 120 | $KNO_2$ $12,5 \cdot 10^{-3}$ mole | 35 mn | 98 | 14 000 |
| 121 | NaSCN $12,5 \cdot 10^{-3}$ mole | 30 mn | 95 | 10 000 |
| 122 | KCNO $12,5 \cdot 10^{-3}$ mole | 30 mn | 90 | 12 000 |

TABLEAU 23

Les essais ont été effectués avec $10^{-1}$ mole de méthacrylonitrile, en masse en utilisant $25 \cdot 10^{-3}$ mole d'amidure de sodium et $12,5 \cdot 10^{-3}$ mole d'activant, à une température de 35 °C.

| Exemple | Activant | T | Rdt % | $\overline{Mn}$ |
|---|---|---|---|---|
| 123 | $KNO_2$ $12,5 \cdot 10^{-3}$ mole | 5 mn | 100 | 38 000 |
| 124 | KCNO $12,5 \cdot 10^{-3}$ mole | 15 mn | 100 | 32 000 |
| 125 | $NaNO_2$ $12,5 \cdot 10^{-3}$ mole | 10 mn | 100 | 29 000 |
| 126 | NaSCN $12,5 \cdot 10^{-3}$ mole | 20 mn | 100 | 35 000 |

TABLEAU 24

Les essais ont été effectués avec $5 \cdot 10^{-2}$ mole de méthacrylonitrile en masse en utilisant $25 \cdot 10^{-3}$ mole d'amidure de lithium, $12,5 \cdot 10^{-3}$ mole d'activant, à une température de 40 °C, pendant 8 heures.

| Exemple | Activant | Rdt % | $\overline{Mn}$ |
|---|---|---|---|
| 127 | NaSCN | 40 | 6 000 |
| 128 | $NaNO_2$ | 48 | 7 200 |
| 129 | $KNO_2$ | 75 | 10 500 |
| 130 | NaCNO | 45 | 6 300 |
| 131 | NaCN | 30 | 3 200 |
| 132 | KCNO | 50 | 8 100 |

TABLEAU 25

Les essais ont été effectués avec $5 \cdot 10^{-2}$ mole de méthacrylonitrile, dans 20 ml de solvant, en utilisant $25 \cdot 10^{-3}$ mole d'amidure de lithium $12,5 \cdot 10^{-3}$ mole d'activant, à une température de 40 °C pendant 18 heures.

| Exemple | Activant | Solvant | Rdt % | $\overline{Mn}$ |
|---|---|---|---|---|
| 133 | NaSCN | THF | 25 | 3 000 |
| 134 | $NaNO_2$ | THF | 28 | 6 200 |
| 135 | KCNO | THF | 19 | 5 100 |
| 136 | $KNO_2$ | THF | 40 | 73 000 |
| 137 | NaSCN | Toluène | 23 | 4 300 |
| 138 | $NaNO_2$ | Toluène | 16 | 3 700 |
| 139 | KCNO | Toluène | 14 | 4 000 |
| 140 | $KNO_2$ | Toluène | 30 | 5 000 |

Exemples 141 à 152 : Polymérisation de l'isoprène

Le mode opératoire est le même que pour le styrène. Les résultats sont réunis dans les tableaux ci-dessous.

TABLEAU 26

Les essais ont été effectués avec $10^{-1}$ mole d'isoprène dans 20 ml de THF, en utilisant $25 \cdot 10^{-3}$ mole d'amidure de sodium et $12,5 \cdot 10^{-3}$ mole d'activant, à une température de 40 °C pendant 18 heures

| Exemple | Activant | Rdt % | $\overline{Mn}$ |
|---|---|---|---|
| 141 | $KNO_2$ | 12 | 1 500 |
| 142 | $NaNO_2$ | 10 | 800 |
| 143 | KCNO | 10 | 1 000 |
| 144 | NaCNO | 9 | 1 300 |
| 145 | NaSCN | 10 | 1 200 |
| 146 | NaCN | 5 | 1 100 |

TABLEAU 27

Les essais ont été effectués avec $10^{-1}$ mole d'isoprène, en masse, en utilisant $25 \cdot 10^{-3}$ mole d'amidure de sodium et $12,5 \cdot 10^{-3}$ mole d'activant, à une température de 40 °C pendant 18 heures.

| Exemple | Activant | Rdt % | $\overline{Mn}$ |
|---|---|---|---|
| 147 | $KNO_2$ | 10 | 2 500 |
| 148 | $NaNO_2$ | 10 | 2 000 |
| 149 | KCNO | 10 | 1 500 |
| 150 | NaCNO | 10 | 1 300 |
| 151 | NaSCN | 10 | 1 400 |
| 152 | NaCN | 10 | 900 |

Exemples 153 à 158 : Polymérisation des hétérocycles

TABLEAU 28

Les essais ont été effectués en utilisant $25 \cdot 10^{-3}$ mole d'amidure de sodium et $12,5 \cdot 10^{-3}$ mole d'activant.

| Exemple | Monomère | Activant | Solvant | T | 0 °C | Rdt % | $\overline{Mn}$ |
|---|---|---|---|---|---|---|---|
| 153 | oxyde d'éthylène 0,19 mole | $NaNO_2$ | Toluène 30 ml | 18 h | 40 | 100 | 6 000 |
| 154 | oxyde d'éthylène 0,20 mole | $NaNO_2$ | — | 18 h | 25 | 100 | 4 500 |
| 155 | carbonate cyclique d'éthyl-2 butyl-2 propane diol-1,3 $5{,}4 \cdot 10^{-2}$ moles | NaSCN | — | 2 h | 25 | 100 | 10 000 |
| 156 | carbonate cyclique de méthyl-2 propyl-2 propane diol-1,3 $6{,}3 \cdot 10^{-2}$ moles | NaSCN | Toluène | 24 h | 25 | 100 | 6 800 |

Les essais effectués avec l'oxyde de propylène en utilisant $25 \cdot 10^{-3}$ mole d'amidure de sodium et $12{,}5 \cdot 10^{-3}$ mole de cyanure de sodium pendant 48 heures à 25 °C montrent une augmentation notable de la masse moléculaire. Les résultats sont réunis dans les exemples 161 et 162.

| exemple | solvant | $\overline{Mn}$ |
|---|---|---|
| 157 | THF 20 ml | 7 500 |
| 158 | en masse | 12 500 |

Exemples 159 à 163 : Polymérisation anionique effectuée en utilisant comme amorceur un amidure alcalin et un mélange de sels associés

TABLEAU 29

Le mode opératoire est le même que pour le styrène. Les résultats sont réunis dans le tableau ci-dessous.

Les essais ont été effectués avec $10^{-1}$ mole de méthacrylate de méthyle, en solvant ou en masse, en utilisant $25 \cdot 10^{-2}$ mole d'amidure de lithium et comme activant un mélange de sels associés, à une température de 40 °C.

| Exemple | Activant | Solvant | T | Rdt % | $\overline{Mn}$ |
|---|---|---|---|---|---|
| 159 | $NaSCN + NaNO_2$ $6 \cdot 10^{-3}$ $6 \cdot 10^{-3}$ | THF | 18 h | 25 | 4 500 |
| 160 | NaSCN + NaCNO $2 \cdot 10^{-3}$ $10^{-3}$ | THF | 18 h | 23 | 5 000 |
| 161 | $KNO_2$ + KCNO $5 \cdot 10^{-3}$ $7.10^{-3}$ | Toluène | 18 h | 22 | 4 500 |
| 162 | $KNO_2$ + NaCN $9 \cdot 10^{-3}$ $3 \cdot 10^{-3}$ | Toluène | 18 h | 25 | 3 900 |
| 163 | $KNO_2$ + NaCNO $5 \cdot 10^{-3}$ $7 \cdot 10^{-3}$ | — | 8 h | 30 | 4 500 |

Exemples 164 à 175 : Polymérisation anionique en absence d'amidure alcalin

Le mode opératoire est le même que pour le styrène. Les résultats obtenus sont réunis dans le tableau ci-dessous.

TABLEAU 30

Les essais ont été effectués avec $10^{-1}$ mole de méthacrylate de méthyle, dans 20 ml de solvant ou en masse, en utilisant uniquement $12{,}5 \cdot 10^{-3}$ mole d'activant ; tous les essais se sont révélés négatifs.

| Exemple | Activant | Solvant |
|---|---|---|
| 164 | $NaNO_2$ | toluène |
| 165 | KCNO | toluène |
| 166 | $KNO_2$ | toluène |
| 167 | NaSCN | toluène |
| 168 | $KNO_2$ | THF |
| 169 | $NaNO_2$ | THF |
| 170 | KCNO | THF |
| 171 | NaSCN | THF |
| 172 | $KNO_2$ | — |
| 173 | $NaNO_2$ | — |
| 174 | NaSCN | — |
| 175 | KCNO | — |

Exemples 176 à 181 : Polymérisation du styrène dans le toluène

On a polymérisé 88 mM de styrène en 8 heures dans 40 ml de toluène à 40 °C, en présence de 25 mM de $NaNO_2$ et d'une quantité de $NaNH_2$ correspondant au rapport molaire indiqué à la colonne 2 du tableau 31 où l'on a indiqué les résultats obtenus :

TABLEAU 31

| Exemple | $NaNH_2/NaNO_2$ | Rdt % | $\overline{Mn}_*$ | $\overline{Mp}_*$ | $I_*$ |
|---|---|---|---|---|---|
| 176 | 1 | 80 | 101 000 | 292 900 | 2,9 |
| 177 | 2 | 100 | 95 600 | 210 300 | 2,2 |
| 178 | 4 | 77 | 64 200 | 173 300 | 2,7 |
| 179 | 6 | 58 | 41 430 | 128 430 | 3,1 |
| 180 | 10 | 40 | 13 300 | 59 850 | 4,5 |
| 181 | 12 | 40 | 10 000 | 48 000 | 4,8 |

* mesurées par GPC à 30 °C dans le THF.

On constate que les rendements les meilleurs sont obtenus pour un rapport voisin de 2 mais qu'on dispose, en faisant varier la proportion d'amidure, d'un moyen pour obtenir une $\overline{Mn}$ comprise entre 100 000 et 10 000.

Exemples 182 à 186 : Polymérisation du styrène en masse

On a polymérisé 88 mM de styrène à 40 °C, pendant 1 heure en présence de 25 mM de $NaNO_2$ et d'une quantité de $NaNH_2$ correspondant au rapport molaire indiqué à la colonne 2 du tableau 32 où l'on a indiqué les résultats obtenus.

TABLEAU 32

| Exemple | $NaNH_2/NaNO_2$ | Rdt % | $\overline{Mn}_*$ | $\overline{Mp}_*$ | $I_*$ |
|---|---|---|---|---|---|
| 182 | 1 | 85 | 45 500 | 409 500 | 9 |
| 183 | 2 | 100 | 53 400 | 341 750 | 6,4 |
| 184 | 4 | 87 | 42 600 | 404 700 | 9,5 |
| 185 | 6 | 85 | 37 500 | 412 500 | 11 |
| 186 | 10 | 80 | 23 600 | 283 200 | 12 |

* mesurées par GPC à 30 °C dans le THF.

On constate qu'en masse comme en solution, les résultats les plus élevés sont obtenus pour un rapport voisin de 2 et qu'une modulation de $\overline{Mn}$ par le taux de $NaNH_2$ est possible.

Exemples 187 à 193 : Polymérisation du styrène dans le THF

On a polymérisé 88 mM de styrène pendant 4 heures dans 40 ml de THF et en présence de 8,3 mM de $NaNO_2$ et 16,7 mM de $NaNH_2$. On a opéré à diverses températures comprises entre − 80 °C et + 40 °C. Les résultats obtenus sont donnés au tableau 33.

TABLEAU 33

| Exemple | 0 °C | Rdt % | $\overline{Mn}_*$ | $\overline{Mp}_*$ | $I_*$ |
|---|---|---|---|---|---|
| 187 | 40 | 100 | 35 700 | 151 500 | 2 |
| 188 | 20 | 100 | 85 000 | 161 500 | 1,9 |
| 189 | 0 | 100 | 87 000 | 165 300 | 1,9 |
| 190 | −20 | 100 | 110 000 | 187 000 | 1,7 |
| 191 | −40 | 100 | 120 000 | 180 000 | 1,5 |
| 192 | −60 | 100 | 137 000 | 205 500 | 1,5 |
| 193 | −80 | 100 | 175 000 | 262 500 | 1,5 |

On constate que les rendements sont excellents à toute température et que lorsque la température de polymérisation baisse l'indice de polydispersité diminue tandis que les masses moléculaires augmentent.

Exemples 194 à 200 : Polymérisation du styrène en solution

On a polymérisé 88 mM de styrène pendant 4 heures en présence de 16,7 mM de $NaNH_2$ et 8,3 mM de $NaNO_2$ dans divers solvants. La température de polymérisation était de 40 °C (sauf pour l'HMPT, 20 °C). Les résultats obtenus sont donnés au tableau 34.

TABLEAU 34

| Exemple | Solvant | Rdt % | $\overline{Mn}_*$ | $\overline{Mp}_*$ | $I_*$ |
|---|---|---|---|---|---|
| 194 | HMPT | 100 | 42 000 | 50 400 | 1,2 |
| 195 | THF | 100 | 75 700 | 151 500 | 1,3 |
| 196 | DME | 100 | 85 000 | 110 500 | 1,3 |
| 197 | Diglyme | 100 | 123 000 | 221 400 | 1,8 |
| 198 | Toluène | 45 | 55 600 | 122 300 | 2,2 |
| 199 | Benzène | 40 | 41 300 | 95 000 | 2,3 |
| 200 | Cyclohexane | 8 | 10 000 | 51 000 | 5,1 |

* mesurées par GPC dans le THF à 30 °C.

On constate que le milieu de polymérisation est un autre moyen possible de sélection des masses moléculaires.

Exemples 201 à 208 : Polymérisation du styrène en masse

On a polymérisé 88 mM de styrène pendant 4 heures à 40 °C (20 °C seulement à l'exemple 202) en présence de 8,3 mM de $NaNO_2$ et 16,7 mM de $NaNH_2$ et en l'absence de solvant. L'amorceur a été préparé dans divers solvants ensuite évaporés à sec (exemples 202 à 208) ou bien le monomère a été coulé simplement sur les sels broyés ensemble (exemple 201). Les résultats obtenus sont indiqués au tableau 35

TABLEAU 35

| Exemple | Solvant | Rdt % | $\overline{Mn}_*$ | $\overline{Mp}_*$ | $I_*$ |
|---|---|---|---|---|---|
| 201 | — | 100 | 173 100 | 917 450 | 5,3 |
| 202 | HMPT | 100 | 74 400 | 290 150 | 3,9 |
| 203 | THF | 100 | 133 600 | 587 850 | 4,4 |

TABLEAU 35 (Suite)

| Exemple | Solvant | Rdt % | Mn* | Mp* | I* |
|---|---|---|---|---|---|
| 204 | DME | 100 | 128 750 | 527 900 | 4,1 |
| 205 | Diglyme | 100 | 141 200 | 663 650 | 4,7 |
| 206 | Toluène | 95 | 103 600 | 507 650 | 4,9 |
| 207 | Benzène | 98 | 101 900 | 509 500 | 5,0 |
| 208 | Cyclohexane | 90 | 99 900 | 479 500 | 4,8 |

* mesurées par GPC dans le THF à 30 °C.

Exemples 209 à 232 : Polymérisation du méthacrylate de méthyle dans le THF

Toutes les polymérisations suivantes ont été effectuées à 35 °C pendant 2 heures dans 30 ml de THF et sur 100 mM de méthacrylate de méthyle, en présence de 16,7 mM d'amidure et de 8,3 mM de sel associé.

Les tableaux 36, 37 et 38 donnent les résultats obtenus respectivement avec $LiNH_2$, $NaNH_2$ et $KNH_2$

TABLEAU 36

| Exemple | Activant | Rendement % | Mn* | Mp* | I* |
|---|---|---|---|---|---|
| 209 | $NaNO_2$ | 57 | 34 400 | 72 240 | 2,1 |
| 210 | NaSCN | 50 | 29 500 | 67 850 | 2,3 |
| 211 | NaCNO | 38 | 19 550 | 52 800 | 2,7 |
| 212 | NaCN | 35 | 17 500 | 43 750 | 2,5 |
| 213 | $KNO_2$ | 64 | 28 800 | 54 700 | 1,9 |
| 214 | KSCN | 59 | 24 800 | 52 100 | 2,1 |
| 215 | KCNO | 45 | 15 100 | 37 750 | 2,5 |
| 216 | KCN | 40 | 12 000 | 27 600 | 2,3 |

* mesurées par GPC à 30 °C dans le THF.

TABLEAU 37

| Exemple | Activant | Rendement % | Mn* | Mp* | I* |
|---|---|---|---|---|---|
| 217 | $NaNO_2$ | 100 | 43 500 | 56 550 | 1,3 |
| 218 | NaSCN | 100 | 22 000 | 46 200 | 2,1 |
| 219 | NaCNO | 96 | 19 200 | 48 000 | 2,5 |
| 220 | NaCN | 90 | 16 200 | 38 900 | 2,4 |
| 221 | $KNO_2$ | 100 | 18 000 | 23 400 | 1,3 |
| 222 | KSCN | 100 | 15 000 | 28 500 | 1,9 |
| 223 | KCNO | 100 | 13 000 | 29 900 | 2,3 |
| 224 | KCN | 100 | 10 000 | 22 000 | 2,2 |

* mesurées par GPC à 30 °C dans le THF.

TABLEAU 38

| Exemple | Activant | Rendement % | Mn* | Mp* | I* |
|---|---|---|---|---|---|
| 225 | $NaNO_2$ | 100 | 23 700 | 28 450 | 1,2 |
| 226 | NaSCN | 100 | 23 000 | 34 500 | 1,5 |
| 227 | NaCNO | 100 | 21 000 | 44 100 | 2,1 |
| 228 | NaCN | 100 | 19 000 | 34 200 | 1,8 |
| 229 | $KNO_2$ | 100 | 12 700 | 19 050 | 1,5 |
| 230 | KSCN | 100 | 11 000 | 20 900 | 1,9 |
| 231 | KCNO | 100 | 8 200 | 18 850 | 2,3 |
| 232 | KCN | 100 | 7 500 | 18 000 | 2,4 |

* mesurées par GPC à 30 °C dans le THF.

Pour autant que l'on sache, on ne connaissait pas, jusqu'à présent, de polyméthacrylate de méthyle ayant un indice de polydispersité comprise entre 1,2 et 1,6 et une masse moléculaire en nombre moyenne comprise entre 12 000 et 45 000.

Exemples 233 à 256 : Polymérisation du styrène en masse

Toutes les polymérisations suivantes ont été effectuées à 45 °C pendant 2 heures, en masse, sur 88 mM de styrène versé sur 16,7 mM d'amidure et 8,3 mM de sel associé, broyés ensemble.

Les tableaux 39, 40 et 41 donnent les résultats respectivement obtenus avec $LiNH_2$, $NaNH_2$ et $KNH_2$.

TABLEAU 39

| Exemple | Activant | Rendement | $\overline{Mn}$* | $\overline{Mp}$* | I* |
|---|---|---|---|---|---|
| | | % | | | |
| 233 | $NaNO_2$ | 15 | 36 000 | 140 400 | 3,9 |
| 234 | NaSCN | 10 | 21 000 | 90 300 | 4,3 |
| 235 | NaCNO | 10 | 16 000 | 81 600 | 5,1 |
| 236 | NaCN | 7 | 9 300 | 454 500 | 4,9 |
| 237 | $KNO_2$ | 20 | 15 600 | 60 850 | 3,9 |
| 238 | KSCN | 15 | 9 300 | 38 150 | 4,1 |
| 239 | KCNO | 15 | 7 800 | 41 350 | 5,3 |
| 240 | KCN | 20 | 1 600 | 7 500 | 4,7 |

* mesurées par GPC à 30 °C dans le THF.

TABLEAU 40

| Exemple | Activant | Rendement | $\overline{Mn}$* | $\overline{Mp}$* | I* |
|---|---|---|---|---|---|
| | | % | | | |
| 241 | $NaNO_2$ | 55 | 104 500 | 376 200 | 3,6 |
| 242 | NaSCN | 60 | 102 000 | 357 000 | 3,5 |
| 243 | NaCNO | 45 | 54 000 | 226 800 | 4,2 |
| 244 | NaCN | 40 | 42 000 | 222 600 | 5,3 |
| 245 | $KNO_2$ | 60 | 33 600 | 110 900 | 3,3 |
| 246 | KSCN | 55 | 21 450 | 87 950 | 4,1 |
| 247 | KCNO | 50 | 10 000 | 38 000 | 3,8 |
| 248 | KCN | 45 | 2 700 | 14 850 | 5,5 |

* mesurées par GPC à 30 °C dans le THF.

TABLEAU 41

| Exemple | Activant | Rendement % | $\overline{Mn}$* | $\overline{Mp}$* | I* |
|---|---|---|---|---|---|
| 249 | $NaNO_2$ | 70 | 98 000 | 294 000 | 3,0 |
| 250 | NaSCN | 55 | 56 400 | 236 800 | 4,2 |
| 251 | NaCNO | 65 | 52 000 | 192 400 | 3,7 |
| 252 | NaCN | 50 | 31 000 | 99 200 | 3,2 |
| 253 | $KNO_2$ | 75 | 22 500 | 92 250 | 4,1 |
| 254 | KSCN | 60 | 9 600 | 30 700 | 3,2 |
| 255 | KCNO | 60 | 6 000 | 18 600 | 3,1 |
| 256 | KCN | 55 | 2 750 | 10 450 | 3,8 |

* mesurées par GPC à 30 °C dans le THF.

On a obtenu des valeurs de $\overline{Mn}$ particulièrement élevées.

Exemples 257 : Copolymérisation de styrène et de méthacrylate de méthyle en solution

On a préparé l'amorceur à l'aide de 17 mM de $NaNH_2$ et de 8,5 mM de $NaNO_2$ dans 100 ml de THF à 40 °C, en 2 heures.

Le réacteur contenant l'amorceur a été refrodi à − 20 °C et on a injecté 88 mM de styrène sur l'amorceur. Au bout d'1 heure on a prélevé la moitié du polystyrène formé. Ce polymère, tué à l'aide d'un peu de méthanol, possédait une masse moyenne en nombre égale à 42 500, conforme à $\overline{Mn}$ théorique.

Sur la moitié restée dans le réacteur on a injecté 20 mM de méthacrylate de méthyle (MAM) qu'on a laissé polymériser pendant 1 heure, toujours à − 20 °C. Le copolymère obtenu avait une masse de 58 800, c'est-à-dire que la partie polyMAM avait une masse $\overline{Mn} = 16\,300$ (contre 20 000 théoriquement) (rendement : 80 %). Les masses moyennes en nombre ont été mesurées par GPC dans le THF à 30 °C.

Exemple 258 : Copolymérisation de styrène et de méthacrylate de méthyle en masse

L'amorceur a été préparé de la même manière dans environ 50 ml de THF. On a alors évaporé le THF puis introduit 88 mM de styrène sur l'amorceur, à − 30 °C et pendant 1 heure. La moitié du polystyrène formé et prélevé avait une masse de 13 400 (rendement : 100 %). On a ensuite introduit sur la moitié restée dans le réacteur 100 mM de MAM, toujours à − 30 °C et pendant 1 heure. On a ainsi obtenu un copolymère de masse 30 900 (théorie 46 000). Le rendement de la copolymérisation en MAM était de 54 %. Les masses moyennes en nombre ont été mesurées par GPC, dans le THF, à 30 °C.

**Revendications**

1. Procédé de polymérisation ou de copolymérisation de monomères vinyliques, hétérocycliques ou diéniques susceptibles de polymériser anioniquement par ouverture d'une double liaison éthylénique ou d'un hétérocycle, caractérisé en ce qu'on amorce la réaction, en présence ou en l'absence d'un solvant, à l'aide d'un amorceur qui résulte de l'association en présence d'un solvant aprotique d'un amidure alcalin choisi dans le groupe formé par l'amidure de sodium, de potassium ou de lithium et d'au moins un sel alcalin dont le cation est choisi dans le groupe formé par le potassium, le lithium ou le sodium, l'anion étant choisi dans le groupe formé par les anions thiocyanate, cyanate, cyanure et nitrite, dans un rapport molaire amidure alcalin/sel associé au moins égal à 1.

2. Procédé de polymérisation ou de copolymérisation anionique selon la revendication 1, caractérisé en ce que le rapport molaire amidure alcalin/sel associé est compris entre 1,5 et 3.

3. Procédé de polymérisation ou de copolymérisation anionique selon l'une quelconque des revendications 1 ou 2, caractérisé en ce que l'amorceur est préparé en présence d'un solvant de constante diélectrique inférieure ou égale à 10 à 25 °C.

4. Procédé de polymérisation ou de copolymérisation anionique selon l'une quelconque des revendications précédentes, caractérisé en ce qu'on utilise les amorceurs suivants :

— $NaNH_2$, $NaNO_2$
— $NaNH_2$, NaSCN
— $KNH_2$, $KNO_2$
— $KNH_2$, KSCN
— $NaNH_2$, KSCN
— $NaNH_2$, $KNO_2$
— $KNH_2$, $NaNO_2$
— $KNH_2$, NaSCN
— $LiNH_2$, KSCN
— $LiNH_2$, $KNO_2$

5. Amorceurs de polymérisation ou de copolymérisation anionique, caractérisé en ce qu'ils résultent de l'association, en présence d'un solvant, d'un amidure alcalin choisi dans le groupe formé par l'amidure de sodium, de potassium ou de lithium et d'au moins un sel alcalin dont le cation est choisi dans le groupe formé par le potassium, le lithium, ou le sodium, l'anion étant choisi dans le groupe étant formé par les anions thiocyanate, cyanate, cyanure et nitrite, dans un rapport molaire amidure alcalin/sel associé au moins égal à 1.

6. Amorceurs de polymérisation ou de copolymérisation anionique selon la revendication 5, caractérisés en ce que le solvant a une constante diélectrique inférieure ou égale à 10 à 25 °C.

7. Amorceurs de polymérisation ou de copolymérisation anionique selon l'une quelconque des revendications précédentes, caractérisés en ce que le solvant est le monomère à polymériser.

8. Amorceurs de polymérisation ou de copolymérisation anionique selon l'une quelconque des revendications précédentes, caractérisés en ce que l'on fait réagir l'amidure alcalin, en présence d'un solvant, sur une quantité molaire 1,5 à 3 fois moindre de sel associé.

9. Amorceurs de polymérisation ou de copolymérisation anionique selon l'une des revendications précédentes, caractérisés en ce que les anions du sel alcalin associé sont le nitrite ou le thiocyanate.

10. Amorceurs de polymérisation ou de copolymérisation anionique selon l'une quelconque des revendications précédentes, caractérisés en ce que les amorceurs sont choisis dans le groupe formé par :

— $NaNH_2$, $NaNO_2$

— $NaNH_2$, $NaSCN$
— $KNH_2$, $KNO_2$
— $KNH_2$, $KSCN$
— $NaNH_2$, $KNO_2$
— $NaNH_2$, $KSCN$
— $KNH_2$, $NaNO_2$
— $KNH_2$, $NaSCN$
— $LiNH_2$, $KSCN$
— $LiNH_2$, $KNO_2$

11. Polyméthacrylate de méthyle ayant un indice de polydispersité compris entre 1,2 et 1,6 et une masse moléculaire moyenne en nombre comprise entre 12 000 et 45 000, fabriqué par le procédé selon l'une quelconque des revendications 1 à 4.

## Claims

1. Process for the polymerisation or copolymerisation of vinyl, heterocyclic or diene monomers capable of polymerising anionically by opening of an ethylenic double bond or of a heterocyclic ring, characterised in that the reaction is initiated, in the presence or in the absence of a solvent, by means of an initiator which results from the combination in the presence of an aprotic solvent of an alkali metal amide selected from the group comprising sodium amide, potassium amide or lithium amide and at least one alkali metal salt of which the cation is selected from the group comprising potassium lithium or sodium, the anion being selected from the group comprising the thiocyanate, cyanate, cyanide and nitrite anions, in a molar ratio of alkali metal amide/associated salt at least equal to 1.

2. Anionic polymerisation or copolymerisation process according to Claim 1, characterised in that the molar ratio of alkali metal/associated salt is between 1.5 and 3.

3. Anionic polymerisation or copolymerisation process according to either of Claims 1 and 2, characterised in that the initiator is prepared in the presence of a solvent of dielectric constant inferior or equal to 10 at 25 °C.

4. Anionic polymerisation or copolymerisation process according to any one of the preceding claims, characterised in that the following initiators are used :

— $NaNH_2$, $NaNO_2$
— $NaNH_2$, $NaSCN$
— $KNH_2$, $KNO_2$
— $KNH_2$, $KSCN$
— $NaNH_2$, $KSCN$
— $NaNH_2$, $KNO_2$
— $KNH_2$, $NaNO_2$
— $KNH_2$, $NaSCN$
— $LiNH_2$, $KSCN$
— $LiNH_2$, $KNO_2$

5. Anionic polymerisation or copolymerisation initiators, characterised in that they result from the combination, in the presence of a solvent, of an alkali metal amide selected from the group comprising sodium amide, potassium amide or lithium amide and at least one alkali metal salt of which the cation is selected from the group comprising potassium, lithium or sodium, the anion being selected from the group comprising the thiocyanate, cyanate, cyanide and nitrite anions, in a molar ratio of alkali metal amide/associated salt at least equal to 1.

6. Anionic polymerisation or copolymerisation initiators according to Claim 5, characterised in that the solvent has a dielectric constant inferior or equal to 10 at 25 °C.

7. Anionic polymerisation or copolymerisation initiators according to any one of the preceding claims, characterised in that the solvent is the monomer to be polymerised.

8. Anionic polymerisation or copolymerisation initiators according to any one of the preceding claims, characterised in that the alkali metal amide is reacted, in the presence of a solvent, with an amount of the associated salt which, in molar terms, is from 1.5 to 3 times smaller than the amount of alkali metal amide.

9. Anionic polymerisation or copolymerisation initiators according to any one of the preceding claims, characterised in that the preferred anions of the associated alkali metal salt are the nitrite or thiocyanate anion.

10. Anionic polymerisation or copolymerisation initiators according to any one of the preceding claims, characterised in that the initiator are selected from the group comprising :

— $NaNH_2$, $NaNO_2$
— $NaNH_2$, $NaSCN$

— $KNH_2$, $KNO_2$
— $KNH_2$, KSCN
— $NaNH_2$, $KNO_2$
— $NaNH_2$, KSCN
— $KNH_2$, $NaNO_2$
— $KNH_2$, NaSCN
— $LiNH_2$, KSCN
— $LiNH_2$, $KNO_2$

11. Polymethyl methacrylate having a polydispersity index of between 1.2 and 1.6 and a number-average molecular weight of between 12,000 and 45,000, prepared by the process according to any one of claims 1 to 4.

## Ansprüche

1. Verfahren zur Polymerisation oder Copolymerisation von vinylischen, heterocyclischen oder dienischen Monomeren, die durch Öffnung einer äthylenischen Doppelbindung oder eines Heterocyclus anionisch polymerisiert werden können, dadurch gekennzeichnet, daß die Reaktion in Gegenwart oder Abwesenheit eines Lösungsmittels mit einem Initiator ausgelöst wird, der aus der Assoziation eines unter Natriumamid, Kaliumamid und Lithiumamid ausgewählten Alkaliamids mit mindestens einem Alkalisalz, dessen Kation unter Kalium, Lithium und Natrium und dessen Anion unter Thiocyanat, Cyanat, Cyanid und Nitrit ausgewählt ist, im Molverhältnis Alkaliamid/assoziiertes Salz von mindestens gleich 1 in Gegenwart eines aprotischen Lösungsmittels resultiert.

2. Verfahren nach Anspruch 1, dadurch gekennzeichnet, daß ein Molverhältnis Alkaliamid/assoziiertes Salz von 1,5 bis 3 angewandt wird.

3. Verfahren nach Anspruch 1 oder 2, dadurch gekennzeichnet, daß ein Initiator verwendet wird, der in Gegenwart eines Lösungsmittels mit einer Dielektrizitätskonstante bei 25 °C ≤ 10 hergestellt ist.

4. Verfahren nach einem der Ansprüche 1 bis 3, dadurch gekennzeichnet, daß folgende Initiatoren verwendet werden :

— $NaNH_2$, $NaNO_2$
— $NaNH_2$, NaSCN
— $KNH_2$, $KNO_2$
— $KNH_2$, KSCN
— $NaNH_2$, KSCN
— $NaNH_2$, $KNO_2$
— $KNH_2$, $NaNO_2$
— $KNH_2$, NaSCN
— $LiNH_2$, KSCN
— $LiNH_2$, $KNO_2$.

5. Initiatoren zur anionischen Polymerisation oder Copolymerisation, dadurch gekennzeichnet, daß sie aus der Assoziation eines unter Natriumamid, Kaliumamid und Lithiumamid ausgewählten Alkaliamids mit mindestens einem Alkalisalz, dessen Kation unter Kalium, Lithium und Natrium und dessen Anion unter Thiocyanat, Cyanat, Cyanid und Nitrit ausgewählt ist, im Molverhältnis Alkaliamid/assoziiertes Salz von mindestens gleich 1 in Gegenwart eines Lösungsmittels resultieren.

6. Initiatoren nach Anspruch 5, dadurch gekennzeichnet, daß sie in Gegenwart eines Lösungsmittels mit einer Dielektrizitätskonstante bei 25 °C ≤ 10 erhalten sind.

7. Initiatoren nach Anspruch 5 oder 6, dadurch gekennzeichnet, daß sie unter Verwendung des zu polymerisierenden Monomers als Lösungsmittel erhalten sind.

8. Initiatoren nach einem der Ansprüche 5 bis 7, dadurch gekennzeichnet, daß sie durch Umsetzung des Alkaliamids in Gegenwart eines Lösungsmittels mit einer 1,5- bis 3-fach geringeren Molmenge des zu assoziierenden Salzes hergestellt sind.

9. Initiatoren nach einem der Ansprüche 5 bis 8, gekennzeichnet durch Nitrit oder Thiocyanat als Anionen des assoziierten Alkalisalzes.

10. Initiatoren nach einem der Ansprüche 5 bis 9, dadurch gekennzeichnet, daß sie ausgewählt sind unter

— $NaNH_2$, $NaNO_2$
— $NaNH_2$, NaSCN
— $KNH_2$, $KNO_2$
— $KNH_2$, KSCN
— $NaNH_2$, $KNO_2$
— $NaNH_2$, KSCN

— $KNH_2$, $NaNO_2$
— $KNH_2$, NaSCN
— $LiNH_2$, KSCN
— $LiNH_2$, $KNO_2$

11. Polymethylmethacrylat mit einer Einheitlichkeit von 1,2 bis 1,6 und einem Zahlenmittel des Molekulargewichts von 12 000 bis 45 000, erhalten nach dem Verfahren nach einem der Ansprüche 1 bis 4.